# FASCICULE DE BREVET EUROPEEN

(11) **EP 0 621 536 B1**
(45) Date de publication et mention de la délivrance du brevet: **24.02.1999**
(21) Numéro de dépôt: 94400799.6
(22) Date de dépôt: 13.04.1994
(51) Int. Cl.: G06F 11/00

(54) **Outil de mise au point d'un système d'exploitation**
Betriebssystemfehlerbeseitiger
Operating system debugger

(30) Priorité: 22.04.1993 FR 9304774
(43) Date de publication de la demande: 26.10.1994
(73) Titulaire: BULL S.A., 78430 Louveciennes (FR)
(72) Inventeur: Joannin, Jean-Pierre, F-38320 Eybens (FR)
(74) Mandataire: Colombe, Michel

(56) Documents cités:
- US-A- 4 819 234
- IBM TECHNICAL DISCLOSURE BULLETIN. vol. 34, no. 1 , Juin 1991 , NEW YORK US pages 451 - 452 'Resetting dirty bits on OS/2 2.0'

## Description

La présente invention telle qu'elle est définie dans les revendications concerne un outil de mise au point d'un système d'exploitation d'une machine comprenant, entre autres, au moins un processeur, en relation avec le processeur, une mémoire et une unité de gestion de la mémoire.

Il est connu que, de manière habituelle, au démarrage d'un système, qu'il soit monoprocesseur ou multiprocesseur, le noyau ou système d'exploitation fonctionne en mode d'adressage physique, également appelé mode réel, tant que l'unité de gestion de la mémoire n'est pas initialisée, puis dès que cette dernière est initialisée tourne en mode d'adressage virtuel et c'est seulement à cet instant qu'un outil de mise au point qui fonctionne généralement selon le mode virtuel, devient opérationnel. Ceci entraîne un certain nombre d'inconvénients. En effet, les phases d'initialisation ne peuvent être mises au point qu'après l'initialisation de l'unité de gestion de la mémoire, l'outil de mise au point ou "débogueur" qui utilise les adresses virtuelles étant dépendant de l'unité de gestion de la mémoire qui traduit les adresses physiques en adresses virtuelles. Une erreur survenant pendant les phases d'intialisation peut donc être difficile à détecter, le système pouvant rester bloquer. De même, l'outil de mise au point dépendant de l'unité de gestion de la mémoire n'autorise pas de manière simple un changement du contexte courant à un autre contexte désiré, un seul contexte étant valide à un instant donné à travers l'unité de gestion de la mémoire. Enfin, lorsqu'une défaillance de la mémoire virtuelle survient, que ce soit pendant les phases d'initialisation où l'outil de mise au point n'est pas encore actif ou par la suite lorsque la mémoire virtuelle est initialisée, ledit outil peut être considérablement perturbé puisqu'il utilise ladite mémoire virtuelle, en outre, dans ces conditions, il ne peut servir à l'analyse de telles défaillances. Le document US-A- 4 819 234 divulgue un "débogeur" selon l'art antérieur. La présente invention a pour but de remédier aux divers inconvénients présentés par l'outil de mise au point de l'art antérieur et propose un outil efficace, aisé à mettre en oeuvre et qui, en outre, peut être utilisé de manière totalement autonome.

Pour cela l'outil de mise au point d'un système d'exploitation d'une machine de type mentionné dans le préambule est remarquable en ce que, tout au long de la mise au point, effectuée selon une procédure prédéterminée, il exécute toute opération en mode physique travaillant dans une zone de la mémoire où le mode d'adressage virtuel est égal au mode d'adressage physique et de manière indépendante de l'unité de gestion de la mémoire, ledit outil supportant pour le contrôle des phases d'initialisation de la machine au moins deux vecteurs d'exception et comprenant entre autres, sa propre pile qu'il initialise, un décodeur utilisant un algorithme exploitable quel que soit le contexte du processus analysé et des moyens de stockage du contexte décodé.

Ainsi, une des idées-clés de l'invention consiste à concevoir un outil indépendant et donc qui n'utilise pas l'unité de gestion de la mémoire du processeur pour accéder aux adresses virtuelles. Un seconde importante idée de l'invention réside dans le fait que toute opération de l'outil est effectuée en mode physique, l'outil travaillant dans une zone de la mémoire où le mode virtuel est égal au mode physique et comportant un décodeur qui lui permet de travailler en mode non translaté puisque, lorsque cela est nécessaire, la translation ou conversion du mode virtuel au mode physique est réalisée directement par ledit décodeur.

Pour cela ce dernier utilise pour tout accès mémoire un algorithme de simulation de la mémoire virtuelle qui est exploitable quel que soit le contexte choisi à traiter. En fait, l'outil tourne toujours en mode physique et dès que l'unité de gestion de la mémoire est initialisée, il exécute lui-même la translation pour récupérer les adresses physiques à partir des adresses virtuelles, son décodeur simulant alors l'algorithme utilisé ordinairement par l'unité de gestion de la mémoire. L'utilisation d'un outil de mise au point ainsi conçu de manière indépendante de l'unité de gestion de la mémoire entraîne un grand nombre d'avantages dont le premier est d'autoriser une mise au point de toutes les phases y compris des phases d'initialisation. En particulier, le système d'exploitation ainsi que l'unité de gestion de la mémoire peuvent être mis en route sous le contrôle de l'outil de mise au point qui, en outre, peut servir de manière totalement autonome dans un mode que l'homme de l'art a coutume d'appeler "standalone".

Dans ce mode "standalone", il est alors permis de mettre au point des programmes autonomes ou des codes de mise en route du système d'exploitation.

De manière remarquable l'outil de mise au point permet la sélection de tout contexte d'un des processus contenus dans une table de processus inscrite dans la mémoire, la table de processus contenant l'adresse du contexte à sélectionner, ladite adresse virtuelle étant décodée pour retrouver ledit contexte et ce dernier étant alors substitué au contexte courant par recopie dans les moyens de stockage après réinitialisation de la pile.

Ainsi, tout l'espace virtuel du système est rendu visible. A la différence de l'outil de l'art antérieur qui donne une même visibilité du système d'exploitation où seul le traitement du processus qui est en train d'être réalisé est vu en mode virtuel par l'intermédiaire de son contexte virtuel, l'outil selon l'invention est capable de passer du contexte courant à n'importe quel autre contexte choisi en prenant le contexte virtuel correspondant et lui appliquant une translation du mode virtuel au mode physique. Le présent outil possède des caractéristiques de mise au point et permet une analyse des données de n'importe quel contexte relatif à n'importe quel processus. Il peut travailler indépendamment des contextes puisqu'il assure lui-même la translation du mode virtuel vers le mode physique.

Une remarque d'ordre général peut être ici faite, qui concerne un préjugé. La différence fondamentale entre l'unité de gestion de la mémoire et le décodeur est de toute évidence relative à la performance. Cependant, dans le cas présent, comme l'outil de mise au point est totalement maître de la ressource processeur lorsqu'il est actif, le problème du temps de réponse ne se pose plus.

De plus l'outil de mise au point selon l'invention peut être avantageusement utilisé pour l'analyse de l'image-mémoire appelée "dump" par l'homme du métier. En effet, toute image-mémoire du mode physique peut être obtenue par l'intermédiaire d'un vidage d'autopsie ("post-mortem dump") ou au moyen d'un dispositif de pilotage de mémoire ("memory driver") physique, cette image-mémoire peut alors être explorée en utilisant l'outil de mise au point en mode utilisateur. Le fait que l'outil peut réaliser lui-même une translation du mode virtuel vers le mode physique autorise ce dernier à accéder à toute adresse virtuelle du système en mode utilisateur. L'outil permet donc également lorsqu' il fonctionne en mode utilisateur d'analyser le système courant ou le résultat d'un vidage de mémoire après un incident. Ce type d'analyse était nécessairement effectuée dans l'art antérieur au moyen d'un outil d'analyse spécifique indépendant de l'outil de mise au point.

Un autre avantage tient au fait qu'utilisant sa propre pile et ses propres vecteurs d'exception, il est immunisé contre les défaillances de la pile du système.

Comme précédemment dit, la mise au point est effectuée selon une procédure prédéterminée. Selon cette procédure, de manière remarquable, dans une première étape l'outil reconnaissant un appel provoqué par une exception, sélectionne et initialise sa propre pile pour travailler en mode physique, dans une seconde étape de prise de contrôle il reçoit les paramètres du contexte à traiter et utilise l'algorithme de translation pour simuler pour tout accès la mémoire virtuelle au moyen du décodeur translatant l'adresse virtuelle vers l'adresse physique, les paramètres du contexte ainsi décodés étant transférés dans les moyens de stockage du contexte, puis dans une troisième étape, il initialise la console pour qu'un opérateur soit ainsi autorisé à agir alors que dans une dernière étape une fois la mise au point effectuée il rend le contrôle à la machine.

Une telle procédure permet de réaliser une mise au point aisée, indépendante et efficace durant toutes les phases de fonctionnement de la machine et pour tout contexte.

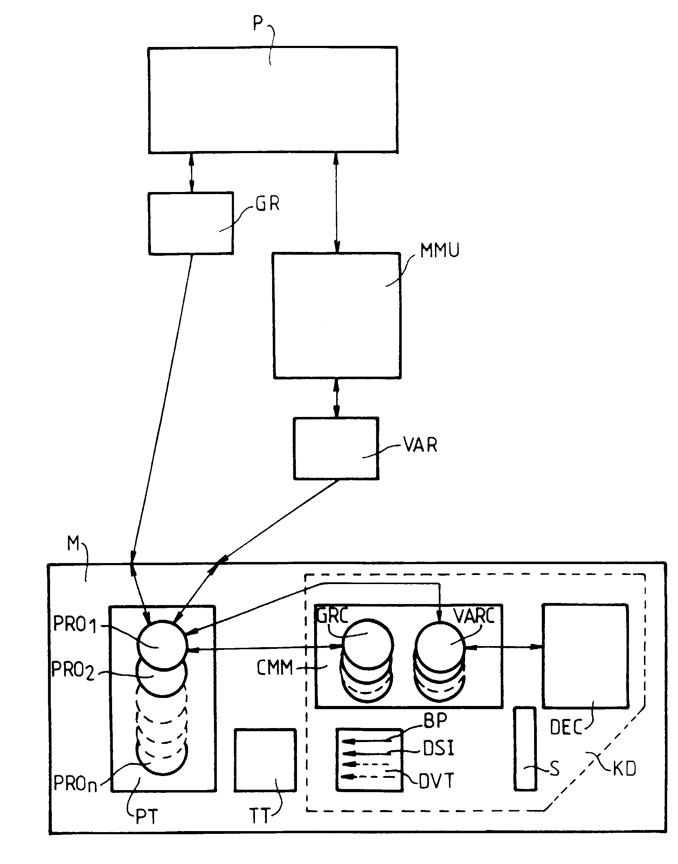

La description suivante en regard du dessin annexé, le tout donné à titre d'exemple non limitatif, fera bien comprendre comment l'invention peut être réalisée.

La figure représente un schéma synoptique de l'environnement dans lequel est intégré et évolue l'outil de mise au point selon l'invention.

Sur la figure est représentée de manière schématique et volontairement simplifiée la partie d'un système d'exploitation constituant l'environnement nécessaire à la mise en oeuvre et à l'appréhension du fonctionnement de l'outil de mise au point KD dudit système d'exploitation, en particulier le processeur P, la mémoire M et l'unité de gestion de la mémoire MMU. Associés au processeur P les registres généraux GR contiennent, entre autres, les différents contextes du système attachés aux différents processus PRO1, PRO2,..., PROn, eux-mêmes contenus dans la table des processus PT implantée dans la mémoire M.

Egalement associés à l'unité de gestion de la mémoire MMU les registres d'adressage virtuel VAR contenant les adresses virtuelles des différents contextes attachés aux différents processus contenus dans la table des processus PT.

L'outil de mise au point KD, dans son intégralité, est implanté et verrouillé dans la mémoire M de manière remarquable dans une zone où le mode d'adressage virtuel est égal au mode d'adressage physique, qui est donc une zone non paginable, et ainsi de manière indépendante de l'unité de gestion de la mémoire MMU. En général, il y a toujours une partie du système d'exploitation qui est obligatoirement implanté dans une zone de la mémoire où le mode d'adressage virtuel est égal au mode d'adressage physique. De même, il est normal que tous les vecteurs d'exception ainsi que tous les traitements proches du processeur soient implantés dans ce même type de zone de manière à pouvoir fonctionner dans les deux modes. L'outil KD selon la présente invention fait partie de cette catégorie. L'outil KD comprend de manière avantageuse sa propre pile S, un décodeur DEC et des moyens de stockage CMM du contexte décodé. L'outil KD possède en outre, une table de vecteurs DVT qui comporte au moins deux vecteurs d'exception BP et DSI qui autorisent un fonctionnement efficace pendant les phases d'initialisation comme cela sera explicité dans la suite.

A la mise en route, selon l'invention, l'outil KD doit démarrer en mode non translaté (c'est-à-dire en mode physique) et il doit rester également dans ce mode non translaté même quand la mémoire virtuelle est initialisée.

Pour cela quand l'outil est appelé pour le contrôle des phases d'initialisation et le bon fonctionnement du système d'exploitation, les deux bits du mode état du processeur P sont invalidés pour imposer de travailler en mode physique.

Ces deux bits du processeur P à invalider sont, de manière connue, le bit de validation de la translation pour le code instruction et le bit de validation pour la translation des données, ils sont en général manipulés en même temps. De plus, le fait de travailler en mode non translaté permet, comme cela a été dit précédemment, d'être indépendant des contextes du système puisque la translation est faite par le décodeur de l'outil KD lui-même. Ainsi quand le contexte courant est analysé, le décodeur utilise un algorithme qui doit simuler la mémoire virtuelle. Cet algorithme est exploitable quel que soit le contexte, ce qui permet de changer aisément de contexte lorsque cela est désiré. En outre, avantageusement, lorsque l'outil KD est invoqué pour prendre le contrôle parce que, par exemple, il apparaît une défaillance de la mémoire virtuelle, l'outil KD est toujours actif et n'est pas sujet à ladite défaillance du système puisqu'il n'utilise pas ladite mémoire virtuelle. Ceci est valable à la mise en route ou en cours de vie du système, dès qu'une défaillance de la mémoire virtuelle est détectée, cette dernière peut être analysée puisque l'outil KD travaille en mode physique donc non translaté. Cet algorithme qui permet au décodeur DEC de faire le décodage des adresses virtuelles, est en fait le même que l'algorithme de décodage du microprocesseur employé (diffusé par les constructeurs) qui décrit le fonctionnement de la mémoire virtuelle, il suffit alors de le traduire en code.

L'outil KD a ainsi, avec le décodeur DEC son propre translateur qui joue le rôle de l'unité de gestion de la mémoire sans pour autant en présenter les inconvénients.

Outre les adresses propres au système d'exploitation, sont également décodées selon la même technique, les adresses utilisateur d'un quelconque processus utilisateur qui tourne sous le système d'exploitation, les algorithmes de décodage étant les mêmes. Un énorme avantage ainsi apparaît du fait qu'il est obtenu de manière aisée une visibilité de tout l'espace utilisateur. En effet les différents processus utilisateur appartiennent à des espaces virtuels différents dont les adresses peuvent être décodées de la même façon.

Le processus tournant à un instant donné utilise l'ensemble des registres GR et VAR respectivement associés au processeur P et à l'unité de gestion de la mémoire MMU de la machine qui contiennent le contexte du fonctionnement de ce processus contenu dans la table des processus PT. L'outil KD utilise des registres GRC et VARC associés à ce processus pour récupérer le contexte passé en paramètres. Ces registres GRC et VARC sont contenus dans les moyens de stockage du contexte CMM et représentent à un instant donné le contenu des registres GR et VAR, le décodeur DEC simulant la fonction de translation de l'unité de gestion de la mémoire MMU pour décoder les adresses du contexte permettant d'accéder à la mémoire M. En mémoire il y a aussi les tables de translation TT qui permettent de réaliser le décodage d'une adresse. De même que l'unité MMU le décodeur DEC utilise ces tables TT pour en déduire une adresse physique.

Pour les besoins de l'outil KD donc, lorsque survient une exception, le contexte contenu dans les registres GR et VAR est recopié dans les registres associés GRC et VARC pour les sauvegarder, les registres GR et VAR étant utilisés pour le traitement de l'exception. De cette manière sauvegardé, le contexte peut ainsi, une fois le traitement de l'exception terminé, être restauré et la procédure pourra redémarrer à l'endroit de l'interruption. Les paramètres du contexte sauvegardé permettent de savoir à quel endroit le processus a été interrompu par l'exception. Le contexte sauvegardé comporte également l'indication du registre de commande (appelé par l'homme de l'art "program counter") concernant l'adresse du vecteur d'exception qui a été généré.

De manière encore plus détaillée et selon une procédure prédéterminée, l'outil KD lorsqu'il est invoqué par une exception doit, pour dérouler son code, utiliser ses registres GRC et VARC ainsi que sa pile interne S qui doit pour cela être initialisée. Une fois la pile S initialisée, l'outil KD, de par sa conception (implantation dans une zone de la mémoire où le mode d'adressage virtuel est égal au mode d'adressage physique), déroule son code en mode physique. Il reçoit alors les paramètres du contexte du processus à analyser dans ses registres GRC et VARC c' est-à-dire en fait d'abord dans son registre VARC l'adresse passée en paramètres permettant de savoir où se trouve le contexte.

Le contexte contient toutes informations qui vont permettre de décoder les adresses virtuelles du processus courant.

Cette adresse est décodée par le décodeur DEC, ce qui permet de retrouver le contexte en mémoire et de la recopier dans le registre GRC, l'outil KD y ayant alors directement accès pour son analyse. Ceci explique l'avantage que procure l'outil KD lorsqu'il est désiré changer de contexte pour un autre processus puisqu'il suffit, en effet, de décoder l'adresse de ce nouveau contexte et de le recopier ensuite dans le registre GRC. Ainsi, il peut être aisément accédé à n'importe quel contexte indépendamment de l'unité de gestion de la mémoire MMU, simplement en décodant l'adresse du contexte désiré analysé.

De même pour passer d'un système à un autre, il suffit de réécrire une fonction pour chaque système : la fonction décrite par l'algorithme de décodage du mode virtuel en mode physique. En effet ces différents systèmes sont compatibles entre eux au niveau de leur architecture, seul le processeur change ce qui signifie qu'il est seulement nécessaire de changer la technique de décodage et donc l'algorithme de décodage en fonction du nouveau processeur.

L'outil KD peut être initialisé, par exemple dans le processus de démarrage (phase de "boot") ce qui le rend complètement indépendant et le rend actif très tôt dès les phases d'initialisation du système avant même que le système n'ait véritablement démarré, la phase de "boot" se faisant sous le contrôle de l'outil KD.

L'outil KD a de préférence ses propres vecteurs d'exception contenus à des adresses fixes dans sa table de vecteurs d'exception DVT. Ainsi au moins deux vecteurs BP et DSI sont utilisés au démarrage directement par l'outil KD indépendamment du système d'exploitation. Le premier vecteur BP est associé à tous les points d'arrêt, l'outil KD sait ainsi tout de suite mettre des points d'arrêt pour une analyse qu'il désire effectuer. Le second vecteur DSI est le vecteur qui est appelé chaque fois qu'il est trouvé une adresse invalide dans le système et ceci même lors des phases d'initialisation du système. En outre, l'outil KD peut utiliser d'autres vecteurs, en particulier, lorsque le processeur le permet, le vecteur d'exception permettant de faire des analyses pas à pas ("stepping") le processeur P s'arrêtant automatiquement sur chaque instruction en générant à chaque pas une exception. Ce dernier vecteur d'exception peut se révéler particulièrement utile et avantageux lorsque le système comporte un multiprocesseur, puisqu'il permet au processeur P considéré d'effectuer une analyse pas à pas sans aucunement perturber l'un quelconque des autres processeurs.

Le principe de la mise au point consiste, de manière générale, à placer des points d'arrêt. Pour cela, une instruction est écrite qui va provoquer une exception à la place de l'instruction qui devrait réellement s'exécuter.

Lorsque le programme est déroulé, au moment du passage sur cette instruction l'exception est générée, le processeur se branche alors à une adresse prédéfinie qui permet le traitement de l'exception. Dans tous les cas, toutes les exceptions sont appelées au niveau du processeur en mode physique. Dans le cas présent, l'exception doit, pour être traitée, être reconnue comme étant du type correspondant à la mise au point d'un système d'exploitation. L'outil sait qu'il est invoqué lorsqu'il reconnaît une telle exception et peut alors recevoir les paramètres du contexte de l'exception et récupérer ce contexte pour l'analyser. A l'émission d'un message décrivant qu'un point d'arrêt a été rencontré à une adresse donnée, l'opérateur a la possibilité d'agir, il peut visualiser des zones de mémoire, continuer l'analyse pas à pas à partir de cette adresse, mettre d'autres points d'arrêt à d'autres adresses pour s'arrêter aux dites adresses ou redonner le contrôle au système.

Lorsqu'il rend le contrôle au système, le contexte qu'il a analysé est restauré par la machine qui reprend son exécution à l'endroit où il y avait eu interruption.

De manière remarquable également, au cours de l'initialisation de l'outil KD l'interface console est initialisée pour permettre, dès cet instant, à un opérateur d'intervenir. Toujours dans la phase d'initialisation de l'outil KD et juste après l'initialisation de la console, lors de la première initialisation du système, il peut être prévu dans le code de l'outil KD un point d'arrêt statique sur le système qui génère une exception permettant à l'opérateur d'intervenir lors de la première mise au point du système après l'émission d'un message et de contrôler l'initialisation standard du système. L'opérateur peut ensuite placer des points d'arrêt à des adresses prédéfinies, éventuellement faire du pas à pas dans le programme.

Dans un environnement extérieur tel qu'UNIX (marque déposée par UNIX System Laboratories Inc.), une façon de rendre encore plus indépendant et autonome l'outil KD, consiste pour ce dernier, à prendre dans un premier temps le contrôle de ses vecteurs d'exception, puis ensuite à fournir lesdits vecteurs à l'environnement extérieur tel qu'UNIX. En effet, les vecteurs sont alors directement associés à cet environnement extérieur et l'outil KD peut être appelé pour mettre au point des programmes autonomes ou des codes de mise en route du système de manière totalement indépendante du système d'exploitation.

Enfin, de manière avantageuse l'outil de mise au point selon l'invention peut être efficacement utilisé pour l'analyse de l'image-mémoire ("Post-mortem dump"). En effet, puisque l'outil KD sait scruter la mémoire en mode physique, son utilisation peut être étendue à une application d'analyse de l'image-mémoire. Quand une analyse de l'image-mémoire est effectuée le même algorithme est encore applicable, une telle analyse étant obligatoirement opérée en mode physique.

Pour cela, l'image-mémoire est, comme cela est fait habituellement, récupérée sur un disque ou dans un fichier, puis de manière originale, l'algorithme mis en oeuvre par l'outil KD est appliqué au contenu de ce disque ou de ce fichier, permettant ainsi d'analyser un problème donné suite à un dysfonctionnement du système. Dans une telle application, l'image-mémoire récupérée peut être directement analysée sur un système standard par l'intermédiaire de l'outil KD assimilé à un analyseur d'image-mémoire, simulant la mémoire virtuelle (les informations récupérées ayant obligatoirement des adresses virtuelles), le même algorithme étant utilisé sans développement supplémentaire. Par conséquent, grâce à la conception originale de l'outil KD, un seul développement et donc un seul outil peut être utilisé, là où ordinairement deux outils indépendants sont nécessaires.

En conclusion, l'utilisation de l'outil de mise au point conçu conformément à la présente invention entraîne de nombreux avantages dont l'un des principaux est d'offrir une véritable autonomie, ledit outil exécutant toute opération en mode physique en totale indépendance de l'unité de gestion de la mémoire tout en conservant de très bonnes performances. En outre, la mise au point du système d'exploitation peut être effectuée dès les phases d'initialisation. De plus, tout l'espace virtuel dudit système est rendu visible, l'outil opérant lui-même toute translation du mode virtuel au mode physique et donc autorisant un changement aisé de tout contexte.

## Revendications

1. Outil de mise au point (KD) d'un système d'exploitation d'une machine comprenant, entre autres, au moins un processeur (P), en relation avec le processeur (P) une mémoire (M) et une unité de gestion de la mémoire (MMU), caractérisé en ce que, tout au long de la mise au point effectuée selon une procédure prédéterminée, le dit outil (KD) exécute toute opération en mode physique travaillant dans une zone de la mémoire (M) où le mode d'adressage virtuel est égal au mode d'adressage physique et de manière indépendante de l'unité de gestion de la mémoire (MMU), ledit outil (KD) supportant pour le contrôle des phases d'initialisation de la machine au moins deux vecteurs d'exception (BP), (DSI) et comprenant, entre autres, sa propre pile (S) qu'il initialise, un décodeur (DEC) utilisant un algorithme exploitable quel que soit le contexte du processus analysé et des moyens de stockage du contexte décodé (CMM).

2. Procédure prédéterminée appliquée à l'outil de mise au point selon la revendication 1 caractérisée en ce que dans une première étape l'outil (KD) reconnaissant un appel provoqué par une exception sélectionne et initialise sa propre pile (S) pour travailler en mode physique, dans une seconde étape de prise de contrôle il reçoit les paramètres du contexte à traiter et utilise l'algorithme de translation pour simuler pour tout accès la mémoire virtuelle au moyen du décodeur (DEC) translatant l'adresse virtuelle vers l'adresse physique, les paramètres du contexte ainsi décodés étant transférés dans les moyens de stockage du contexte (CMM), puis dans une troisième étape, il initialise la console, pour qu'un opérateur soit ainsi autorisé à agir alors que dans une dernière étape une fois la mise au point effectuée il rend le contrôle à la machine.

3. Outil de mise au point (KD) selon la revendication 1 ou 2, caractérisé en ce qu'il permet la sélection de tout contexte d'un des processus contenus dans une table de processus (PT) inscrite dans la mémoire (M), la table de processus (PT) contenant l'adresse du contexte à sélectionner, ladite adresse virtuelle étant décodée pour retrouver ledit contexte et ce dernier étant alors substitué au contexte courant par recopie dans les moyens de stockage (CMM) après réinitialisation de la pile (S).

4. Outil de mise au point (KD) selon l'une des revendications précédentes, caractérisé en ce que l'algorithme de décodage utilisé par le décodeur (DEC) est l'algorithme de décodage du processeur employé permettant ainsi une adaptation à tout processeur.

5. Outil de mise au point (KD) selon l'une des revendications précédentes, caractérisé en ce qu'il possède une table de vecteurs d'exception (DVT) contenant à des adresses fixes au moins deux vecteurs d'exception (BP), (DSI), un premier vecteur d'exception (BP) permettant de placer des points d'arrêt à des endroits déterminés autorisant une analyse à partir d'une instruction déterminée et un second vecteur d'exception (DSI) appelé lorsqu'il est trouvé une adresse invalide dans le système analysé.

6. Outil de mise au point (KD) selon la revendication 5, caractérisé en ce que, sa table de vecteurs d'exception (DVT) contient de plus un troisième vecteur d'exception permettant de faire des analyses pas à pas sans perturber les autres processeurs, lorsque le système est multiprocesseur.

7. Outil de mise au point (KD) selon la revendication 5 ou 6, caractérisé en ce que, pour une première mise au point du système d'exploitation, dans la phase d'initialisation de l'outil de mise au point (KD) juste après l'initialisation de la console, il est prévu un point d'arrêt statique sur le système générant une exception permettant à l'opérateur d'intervenir après l'émission d'un message pour contrôler l'initialisation standard du système.

8. Outil de mise au point (KD) selon l'une quelconque des revendications précédentes, caractérisé en ce que, lorsque la machine dans laquelle il est implanté fait partie d'un environnement extérieur tel qu'UNIX, dans un premier temps il prend le contrôle de ses vecteurs d'exception (DVT), puis ensuite il les fournit à l'environnement extérieur, lesdits vecteurs étant directement associés audit environnement extérieur et l'outil de mise au point (KD) étant alors appelé pour effectuer la mise au point désirée, de manière totalement autonome.

9. Utilisation de l'outil de mise au point (KD) selon l'une des revendications précédentes dans un mode utilisateur pour l'analyse de l'image-mémoire.

## Patentansprüche

1. Werkzeug (KD) zum Testen eines Betriebssystems einer Maschine, die unter anderem wenigstens einen Prozessor (P), einen mit dem Prozessor (P) in Beziehung stehenden Speicher (M) und eine Einheit (MMU) zum Steuern des Speichers enthält, dadurch gekennzeichnet, daß das Werkzeug (KD) während des gesamten gemäß einer vorgegebenen Prozedur ausgeführten Tests jede Operation im physischen Modus, der in einer Zone des Speichers (M) arbeitet, in der der Modus der virtuellen Adressierung gleich dem Modus der physischen Adressierung ist, und unabhängig von der Speichersteuereinheit (MMU) ausführt, wobei das Werkzeug (KD) für die Steuerung der Initialisierungsphasen der Maschine wenigstens zwei Ausnahmevektoren (BP), (DSI) unterstützt und unter anderem seinen eigenen Stapel speicher (S), den es initialisiert, einen Decodierer (DEC), der einen unabhängig vom Kontext des analysierten Prozesses nutzbaren Algorithmus verwendet, sowie Mittel (CMM) zum Speichern des decodierten Kontexts enthält.

2. Vorgegebene Prozedur, die auf das Testwerkzeug nach Anspruch 1 angewendet wird, dadurch gekennzeichnet, daß in einem ersten Schritt das Werkzeug (KD), das einen durch eine Ausnahme hervorgerufenen Aufruf erkennt, seinen eigenen Stapelspeicher (S) wählt und initialisiert, um im physischen Modus zu arbeiten, in einem zweiten Schritt der Übernahme der Steuerung die zu verarbeitenden Kontextparameter empfängt und den Übersetzungsalgorithmus verwendet, um für jeden Zugriff den virtuellen Speicher mittels des Decodierers (DEC) zu simulieren, der die virtuelle Adresse in die physische Adresse übersetzt, wobei die so decodierten Parameter des Kontexts an die Kontextspeichermittel (CMM) übertragen werden, und dann in einem dritten Schritt die Tastatur initialisiert, damit eine Bedienungsperson einwirken kann, während es in einem letzten Schritt die Steuerung der Maschine zurückgibt, sobald der Test ausgeführt worden ist.

3. Testwerkzeug (KD) nach Anspruch 1 oder 2, dadurch gekennzeichnet, daß es die Wahl jedes Kontexts eines der Prozesse ermöglicht, die in einer Prozeßtabelle (PT) enthalten sind, die in den Speicher (M) geschrieben ist, wobei die Prozeßtabelle (PT) die Adresse des zu wählenden Kontexts enthält, wobei die virtuelle Adresse decodiert wird, um den Kontext wiederzugewinnen, wobei dieser letztere dann durch den momentanen Kontext ersetzt wird, indem dieser nach der Reinitialisierung des Stapelspeichers (S) in die Speichermittel (CMM) kopiert wird.

4. Testwerkzeug (CD) nach einem der vorangehenden Ansprüche, dadurch gekennzeichnet, daß der vom Decodierer (DEC) verwendete Decodierungsalgorithmus der Decodierungsalgorithmus des verwendeten Prozessors ist, so daß eine Anpassung an jeden Prozessor möglich ist.

5. Testwerkzeug (KD) nach einem der vorangehenden Ansprüche, dadurch gekennzeichnet, daß es eine Ausnahmevektortabelle (DVT) besitzt, die an festen Adressen wenigstens zwei Ausnahmevektoren (BP), (DSI) enthält, einen ersten Ausnahmevektor (BP), der die Anordnung von Haltepunkten an bestimmten Stellen ermöglicht, die eine Analyse anhand eines bestimmten Befehls zulassen, und einen zweiten Ausnahmevektor (DSI), der aufgerufen wird, wenn im analysierten System eine ungültige Adresse gefunden wird.

6. Testwerkzeug (KD) nach Anspruch 5, dadurch gekennzeichnet, daß seine Ausnahmevektortabelle (DVT) außerdem einen dritten Ausnahmevektor enthält, der es ermöglicht, Analysen schrittweise auszuführen, ohne die anderen Prozessoren zu stören, wenn das System ein Multiprozessor ist.

7. Testwerkzeug (KD) nach Anspruch 5 oder 6, dadurch gekennzeichnet, daß für einen ersten Test des Betriebssystems in der Initialisierungsphase des Testwerkzeugs (KD) direkt nach der Initialisierung der Tastatur in dem System ein statischer Haltepunkt vorgesehen ist, der eine Ausnahme erzeugt, die der Bedienungsperson ermöglicht, nach dem Senden einer Nachricht einzugreifen, um die Standardinitialisierung des Systems zu steuern.

8. Testwerkzeug (KD) nach irgendeinem der vorangehenden Ansprüche, dadurch gekennzeichnet, daß dann, wenn die Maschine, in der es installiert ist, einen Teil einer externen Umgebung wie etwa UNIX bildet, es zu einer ersten Zeit die Steuerung seiner Ausnahmevektoren (DVT) übernimmt, anschließend diese an die externe Umgebung liefert, wobei die Vektoren direkt der externen Umgebung zugeordnet werden und das Testwerkzeug (KD) dann aufgerufen wird, um den gewünschten Test in völlig selbständiger Weise auszuführen.

9. Verwendung des Testwerkzeugs (KD) nach einem der vorangehenden Ansprüche in einem Anwendermodus für die Analyse des Speicherbildes.

## Claims

1. Tool (KD) for debugging an operating system of a machine comprising, *inter alia,* at least one processor (P), connected to the processor (P) a memory (M) and a memory management unit (MMU), characterised in that, throughout the debugging performed according to a predetermined procedure, said tool (KD) executes any operation in physical mode working in a zone of the memory (M) where the virtual addressing mode is equal to the physical addressing mode and independently of the memory management unit (MMU), said tool (KD) supporting, for the control of the initialisation phases of the machine, at least two exception vectors (BP), (DSI) and comprising, *inter alia,* its own stack (S) which it initialises, a decoder (DEC) using an algorithm that can be exploited whatever the context of the process being analysed, and means (CMM) for storing the decoded context.

2. Predetermined procedure applied to the debugging tool according to Claim 1 characterised in that, in a first step the tool (KD), recognising a call caused by an exception, selects and initialises its own stack (S) to work in physical mode, in a second step of taking control it receives the parameters of the context to be processed and uses the translation algorithm to simulate, for any access, the virtual memory by means of the decoder (DEC) translating the virtual address to the physical address, the parameters of the context decoded in this way being transferred to the context memory means (CMM) then, in a third step, it initialises the console, so that an operator is in this way authorised to act while, in a last step, once debugging has been performed, he hands over control to the machine.

3. Debugging tool (KD) according to Claim 1 or 2, characterised in that it permits the selection of any context of one of the processes contained in a process table (PT) recorded in the memory (M), the process table (PT) containing the address of the context to be selected, said virtual address being decoded in order to find said context and the latter then being substituted for the current context by copying over to the memory means (CMM) after resetting the stack (S).

4. Debugging tool (KD) according one of the preceding claims, characterised in that the decoding algorithm used by the decoder (DEC) is the decoding algorithm of the processor used, thus allowing it to be adapted to any processor.

5. Debugging tool (KD) according to one of the preceding claims, characterised in that it has a table of exception vectors (DVT) containing, at fixed addresses, at least two exception vectors (BP), (DSI), a first exception vector (BP) making it possible to place stop points at predetermined locations, permitting an analysis on the basis of a predetermined instruction and a second exception vector (DSI) called up when an invalid address is found in the system being analysed.

6. Debugging tool (KD) according to Claim 5, characterised in that its table of exception vectors (DVT) also contains a third exception vector making it possible to carry out step-wise analyses without disturbing the other processors, when the system is a multiprocessor one.

7. Debugging tool (KD) according to Claim 5 or 6, characterised in that, for a first debugging of the operating system, in the phase of initialising the debugging tool (KD) just after the initialisation of the console, a static stop point is provided on the system generating an exception, allowing the operator to intervene after the sending of a message to monitor the standard initialisation of the system.

8. Debugging tool (KD) according to any one of the preceding claims, characterised in that, when the machine in which it is installed forms part of an external environment such as UNIX, it initially takes control of its exception vectors (DVT), then it supplies them to the external environment, said vectors being directly associated with said external environment and the debugging tool (KD) then being called up in order to perform the desired debugging, in a totally autonomous manner.

9. Use of the debugging tool (KD) according to one of the preceding claims in a user mode, to analyse the memory image.
